# EUROPÄISCHE PATENTSCHRIFT

(11) **EP 3 377 298 B1**
(45) Veröffentlichungstag und Bekanntmachung des Hinweises auf die Patenterteilung: **29.01.2020**
(21) Anmeldenummer: 16809027.2
(22) Anmeldetag: 08.12.2016
(51) Int. Cl.: B29C 49/46, B29C 49/06, B29C 49/12, B29C 49/36, B29L 31/00

(54) **STERILE BLASFORMMASCHINE MIT AUSSCHLEUSUNG FÜR BEHÄLTNISSE**
STERILE BLOW MOULDING MACHINE WITH EJECTION FOR CONTAINERS
MACHINE STÉRILE DE MOULAGE PAR SOUFFLAGE PRÉSENTANT UNE ÉVACUATION POUR DES RÉCIPIENTS

(30) Priorität: 16.12.2015 DE 102015122025
(43) Veröffentlichungstag der Anmeldung: 26.09.2018
(73) Patentinhaber: Krones AG, 93073 Neutraubling (DE)
(72) Erfinder: MÜLLER, Holger, 93073 Neutraubling (DE); SÖLLNER, Jürgen, 93073 Neutraubling (DE)
(74) Vertreter: Bittner, Bernhard
(86) Internationale Anmeldenummer: PCT/EP2016/080251
(87) Internationale Veröffentlichungsnummer: WO 2017/102539

(56) Entgegenhaltungen:
- EP-A1- 1 982 820
- EP-A1- 2 407 417
- EP-A2- 2 412 511
- EP-A2- 2 556 943

## Beschreibung

Die vorliegende Erfindung bezieht sich auf eine Vorrichtung zum Umformen von Kunststoffvorformlingen zu Kunststoffbehältnissen. Derartige Vorrichtungen sind aus dem Stand der Technik seit langem bekannt. In jüngerer Zeit sind auch Umformungseinrichtungen bekannt geworden, welche eine derartige Herstellung der Kunststoffbehältnisse beispielsweise eine Blasformung der Kunststoffbehältnisse unter sterilen Bedingungen ermöglichen. Zu diesem Zweck weisen derartige Vorrichtungen einen Reinraum auf, innerhalb dessen der Umformungsvorgang stattfindet. Bei einer aus dem Stand der Technik bekannten Blasmaschine ist das Blasmodul in einer Isolatorbauweise ausgeführt und wird während der Produktion zur Vorbereitung mittels verdampften Wasserstoffperoxid in einen sterilen Zustand gebracht. Dieser sterile Zustand darf während der anschließenden Produktion nicht verlassen werden, da die Kunststoffvorformlinge vor dem Einlauf in das Blasmodul in einem so genannten Zwischenmodul sterilisiert werden. Um diesen sterilen Zustand aufrecht zu erhalten wird üblicherweise mithilfe einer Lüftungstechnik ein Überdruck in dem Reinraum (teilweise auch als Isolator bezeichnet) hergestellt. Bekannte gattungsgemäße Vorrichtungen und Verfahren sind unter anderem in EP2407417A1, EP2412511A2 oder US2012/03890 und EP2556943A2 beschrieben.

Die hohen Anforderungen an diesem Reinraum mit seinen Abdichtungen nach außen lassen derzeit nur ein begrenztes Volumen für durch Blasfehler ausgeschleuste Behältnisse zu. Andererseits ist ein derartiges Ausschleusen von fehlerhaften Behältnissen jedoch vorteilhaft, da vermieden werden soll, dass derartige fehlerhafte Behältnisse zu weiteren Modulen wie beispielsweise einer Füllmaschine gelangen. Behälter, die nicht zu der Füllmaschine transportiert werden können, da der Blasprozess nicht erfolgreich war, werden am Auslauf der Umformungseinrichtung, beispielsweise der Blasmaschine, mittels eines Transfersterns des Blasmoduls ausgestoßen und verbleiben dort bis zum Ende der Produktion liegen. Übersteigt das Volumen an ausgeschleusten Behältnissen den vorhandenen Platzbedarf, ist im schlechtesten Fall ein Öffnen des Isolators bzw. Reinraums notwendig. Dies wiederum hat ein vorzeitiges Beenden der Produktion zur Folge, da die Sterilität des Reinraums unterbrochen wird.

Der vorliegenden Erfindung liegt daher die Aufgabe zugrunde, eine Möglichkeit vorzusehen, welche derartige Produktionsausfälle infolge einer Vielzahl von ausgeschleusten Behältnissen vermeidet. Diese Aufgabe wird erfindungsgemäß durch die Gegenstände der unabhängigen Patentansprüche erreicht.

Vorteilhafte Ausführungsformen und Weitbildungen sind Gegenstand der Unteransprüche.

Eine erfindungsgemäße Vorrichtung zum Umformen von Kunststoffvorformlingen zu Kunststoffbehältnissen weist einen beweglichen Träger auf, an dem wenigstens eine Umformungsstation zum Umformen der Behältnisse angeordnet ist. Dabei wird diese Umformungsstation entlang eines vorgegebenen Transportpfads transportiert und die Vorrichtung weist einen Reinraum auf, innerhalb dessen die Behältnisse umgeformt werden, wobei dieser Reinraum mittels wenigstens einer Wandung gegenüber einer untersterilen Umgebung abgegrenzt ist. Weiterhin weist die Vorrichtung eine Sterilisationseinrichtung zum Sterilisieren der Kunststoffvorformlinge und/oder Kunststoffbehältnisse auf, welche die zu sterilisierenden Kunststoffvorformlinge und/oder Kunststoffbehältnisse zu deren Sterilisation mit einem fließfähigem Sterilisationsmedium beaufschlagt.

Erfindungsgemäß weist die Vorrichtung eine Ausschleuseeinrichtung zum Ausschleusen von Behältnissen aus dem Reinraum auf, und diese Ausschleuseeinrichtung weist wiederum einen Schleusenraum auf, aus welchem ausgeschleuste Behältnisse entnommen werden können, wobei dieser Schleusenraum mit einer ein Sterilisationsmedium enthaltenen Atmosphäre und/oder einem ein Sterilisationsmedium enthaltenden, insbesondere gasförmigen Medium beaufschlagbar ist.

Es wird daher im Rahmen der Erfindung vorgeschlagen, dass eine Ausschleusung von Behältnissen aus dem Reinraum stattfindet, wobei diese Ausschleusung gleichwohl nicht zu einer Kontamination des Reinraums führt. Bei dem fließfähigen Medium handelt es sich insbesondere um ein gasförmiges und/oder flüssiges Medium

Bevorzugt handelt es sich bei dem beweglichen Träger um einen drehbaren Träger und insbesondere um ein so genanntes Blasrad. Vorteilhaft ist eine Vielzahl von Umformungsstationen an diesem Träger angeordnet, wobei jede dieser einzelnen Umformungsstationen zum Umformen der Kunststoffvorformlinge zu Kunststoffbehältnissen dient. Vorteilhaft handelt es sich bei der Vorrichtung um eine Blasmaschine und insbesondere eine so genannte Streckblasmaschine. Dies bedeutet, dass die Kunststoffvorformlinge durch Beaufschlagung mit einem gasförmigen Medium und insbesondere mit Blasluft umgeformt werden.

Bei einer weiteren vorteilhaften Ausführungsform weisen die einzelnen Umformungsstationen jeweils Blasdüsen auf, welche an eine Mündung der Kunststoffvorformlinge anlegbar sind und diese so zu expandieren. Weithin weisen die einzelnen Umformungsstationen jeweils so genannte Reckstangen auf, welche in die Kunststoffvorformlinge einführbar sind, um diese in der Längsrichtung zu dehnen. Dabei ist es auch denkbar, dass diese Reckstangen zumindest teilweise innerhalb des besagten Reinraums geführt werden. Weiterhin weisen die einzelnen Umformungsstationen bevorzugt jeweils Blasformeinrichtungen auf, welche geöffnet und geschlossen werden können.

Dabei sind vorteilhaft Seitenteile bezüglich einer vorgegebenen Schwenkachse schwenkbar, insbesondere einer Schwenkachse, die parallel zu einer Längsrichtung der zu expandierenden Behältnisse verläuft.

Bei einer weiteren vorteilhaften Ausführungsform ist der Reinraum ringförmig ausgebildet und umgibt insbesondere den Transportpfad der Kunststoffvorformlinge ringförmig bzw. torusförmig. Bei einer weiteren vorteilhaften Ausführungsform weist die Vorrichtung eine Abführeinrichtung zum Abführen umgeformter Behältnisse und insbesondere ordnungsgemäß umgeformter Behältnisse auf. Über diese Abführeinrichtung können die Behältnisse einer weiteren Fülleinrichtung zugeführt werden. Die oben beschriebene Ausschleuseeinrichtung dient insbesondere zur Ausschleusung von fehlerhaften Behältnissen, d. h. solchen Behältnissen, welche in fehlerhafter Weise hergestellt wurden.

Damit können Behältnisse wahlweise über die Ausschleuseeinrichtung oder über die Abführeinrichtung aus dem Reinraum gelangen. Vorteilhaft weist die Vorrichtung eine Abdichtungseinrichtung auf, um den Reinraum gegenüber der Umgebung abzudichten. Bei dieser Abdichtungseinrichtung kann es sich um ein so genanntes Wasserschloss handeln, bei dem ein Schwert in einem umlaufenden (jedoch bevorzugt stationär angeordneten) mit Flüssigkeit gefüllten Kanal geführt wird.

Bei einer weiteren vorteilhaften Ausführungsform ist die Sterilisationseinrichtung in einer Transportrichtung der Behältnisse der Umformungseinrichtung vorgeschaltet. Dies bedeutet, dass bereits die Kunststoffvorformlinge sterilisiert werden. Bei einerweiteren vorteilhaften Ausführungsform weist die Vorrichtung eine Erwärmungseinrichtung zum Erwärmen von Kunststoffvorformlingen auf. Bevorzugt ist die erwähnte Sterilisationseinrichtung zwischen dieser Erwärmungseinrichtung und der Umformungseinrichtung angeordnet. Dies bedeutet, dass die von der Erwärmungseinrichtung erwärmten Kunststoffvorformlinge im Anschluss durch die Sterilisationseinrichtung sterilisiert werden. Wie erwähnt handelt es sich um eine Sterilisationseinrichtung, welche die Kunststoffvorformlinge mit einem Sterilisationsmedium, wie beispielsweise Wasserstoffperoxid beaufschlagt. Es wären jedoch auch andere Sterilisationseinrichtungen (alternativ oder zusätzlich) denkbar, beispielsweise solche, welche die Kunststoffvorformlinge mit Elektronen zu deren Sterilisation beaufschlagen.

Bei der Erwärmungseinrichtung kann es sich beispielsweise um einen Infrarot-Ofen handeln, der bevorzugt eine Vielzahl von stationär angeordneten Heizelementen aufweist, an denen die Kunststoffvorformlinge vorbeitransportiert werden.

Bei einer weiteren bevorzugten Ausführungsform handelt es sich bei dem Sterilisationsmedium um ein Gemisch, welches H₂O₂ (Wasserstoffperoxid) und/oder Peressigsäure enthält. Dabei kann das Sterilisationsmedium beispielsweise ein dampf- oder gasförmiges Medium sein.

Bei einer weiteren vorteilhaften Ausführungsform ist eine Fließmitteilleitung vorgesehen, welche den Schleusenraum wenigstens zeitweise mit der Sterilisationseinrichtung verbindet. Bei dieser Ausführungsform wird vorgeschlagen, dass auch in der Sterilisationseinrichtung anfallendes Sterilisationsmedium zum Desinfizieren dieses besagten Schleusenraums dient.

Bei dieser Ausgestaltung wird davon ausgegangen, dass eine Wasserstoffperoxid- oder allgemeine Sterilisationsatmosphäre insbesondere während der Produktion in dem besagten Sterilisationsmodul bzw. Zwischenmodul besteht. Dieses Sterilisationsmedium wird zur Sterilisation der Kunststoffvorformlinge in das Sterilisationsmodul bzw. zu der Sterilisationseinrichtung gebracht. Dabei wird bevorzugt mittels Messeinrichtungen, beispielsweise einer Differenzdruckmessung (ΔP = 0 pa) gegenüber der Umgebung und/oder eine Regelung dieses Drucks beispielsweise mittels Abluftklappen sichergestellt, dass die Sterilisationsmittelatmosphäre innerhalb der Sterilisationseinrichtung aufrechterhalten wird.

Auf diese Weise kann auch eine Kontamination mit Sterilisationsmittel der vorgelagerten Heizeinrichtung und/oder der Umformungseinrichtung verhindert werden. Dabei ist bevorzugt eine Abluftleitung vorgesehen, welche aus der Sterilisationseinrichtung Abluft abzieht. Bei dieser Abluftleitung kann es sich um eine Leitung handeln, welche die oben besagte Fließmittelleitung darstellt oder mit dieser verbunden ist. Auf diese Weise ist es möglich, dass der Schleusenraum mittels Abluft aus der Sterilisationseinrichtung versorgt wird, wobei diese Abluft ein Sterilisationsmedium enthält. Dabei kann sich in dieser Abluft beispielsweise eine verdünnte Sterilisationsmittel-Atmosphäre befinden. Der Anteil des Sterilisationsmediums in dieser Atmosphäre liegt bevorzugt zwischen 300ppm und 5000ppm, bevorzugt zwischen 1000ppm und 4000ppm und besonders bevorzugt zwischen 1500ppm und 3000ppm.

Bei einer weiteren bevorzugten Ausführungsform ist daher die Fließmittelleitung derart gestaltet, dass dem Schleusenraum von der Sterilisationseinrichtung stammendes Sterilisationsmedium zuführbar ist. Dabei liegt bevorzugt diese Konzentration des Sterilisationsmediums unter einem Niveau wie es im Bereich der Sterilisationseinrichtung herrscht. Bevorzugt dient die Fließmittelleitung auch als Abluftleitung der Sterilisationseinrichtung.

Bei einer weiteren vorteilhaften Ausführungsform weist die Vorrichtung eine Pumpeneinrichtung auf, welche das Sterilisationsmittel und/oder die Abluft aus der Sterilisationseinrichtung abführt. Dabei handelt es sich bevorzugt um eine Saugpumpe, welche die Abluft absaugt. Bevorzugt ist diese Pumpeneinrichtung auch in einer Strömungsrichtung der Abluft nach dem Schleusenraum angeordnet. Auf diese Weise zieht die Pumpeneinrichtung Abluft durch den Schleusenraum hindurch ab.

Bei einer weiteren vorteilhaften Ausführungsform weist die Vorrichtung eine Ventileinrichtung auf, welche in einer ersten Ventilstellung bewirkt, dass das Sterilisationsmittel direkt abgeführt wird und dabei insbesondere nicht über den Schleusenraum geführt wird und welche in einer zweiten Ventilstellung bewirkt, dass das Sterilisationsmittel über den Schleusenraum geführt wird, so dass dieser Schleusenraum und/oder die eine darin befindliche Aufbewahrungseinrichtung zum Aufbewahren von Kunststoffvorformlingen sterilisiert werden. Bevorzugt ist daher eine Bypasseinrichtung vorgesehen, welche bewirkt, dass auf Wunsch das Sterilisationsmedium an dem Schleusenraum vorbeigeleitet wird. Dabei erlaubt bevorzugt diese Ventileinrichtung auch Zwischenstellungen, in denen ein Teil der Abluft über den Schleusenraum und ein Teil der Abluft über den Bypass geführt wird.

Bei einer weiteren vorteilhaften Ausführungsform weist die Vorrichtung eine Zuführleitung auf, welche aus der Sterilisationseinrichtung stammendes Sterilisationsmedium dem Schleusenraum zuführt sowie eine Abführleitung, welche aus dem Schleusenraum ein gasförmiges Medium und insbesondere ein das Sterilisationsmittel enthaltendes Medium abführt.

Bevorzugt führt die Fließmittelleitung eine Abluft aus der Sterilisationseinrichtung dem Schleusenraum zu.

Bei einer weiteren vorteilhaften Ausführungsform weist die Vorrichtung eine gegenüber dem Reinraum bewegliche Aufnahmeeinrichtung zur Aufnahme von auszuschleusenden Behältnissen auf. Bei dieser Aufnahmeeinrichtung (im Folgenden auch als Aufbewahrungseinrichtung bezeichnet) kann es sich beispielsweise um einen so genannten Scherbenwagen handeln, der auszuschleusende Behältnisse aufnehmen kann. Dieser Scherbenwagen kann dabei beispielsweise in dem Schleusenraum vorgesehen sein und zum Entleeren dem Schleusenraum zumindest teilweise entnommen werden. Vorteilhaft ist auch diese Aufnahmeeinrichtung durch das Sterilisationsmittel sterilisierbar.

So wäre es denkbar, dass im Laufe der Produktion diese Aufnahmeeinrichtung geöffnet ist, so dass Behältnisse in dieses ausgeschleust werden können. In diesem Zustand kann beispielsweise eine Abluftklappe in einem Hauptabluftstrom der Sterilisationseinrichtung geöffnet sein. Wenn die Aufnahmeeinrichtung mit Behältern befüllt ist, kann eine Verbindung zwischen dem Schleusenraum und der Umformungseinrichtung geschlossen werden, die Aufnahmeeinrichtung kann entnommen, entleert und wieder in den Schleusenraum eingeschoben werden.

Anschließend kann die Aufnahmeeinrichtung resterilisiert werden. Dies kann dadurch erfolgen, dass eine Abluftklappe in einen Hauptabluftstrom schließt, um mit einem Bypass das in den geschossenen Schleusenraum stehende Aufnahmeeinrichtung wieder mit Sterilisationsmittel zu sterilisieren. Nach einer erfolgten Sterilisationszeit öffnet diese Abluftklappe wieder. Danach kann auch wieder eine Verbindung zwischen dem Schleusenraum und dem eigentlichen Reinraum geöffnet werden, die Produktion kann fortgeführt werden. Es wäre hierbei sogar denkbar, dass während des Entleerens der Aufnahmeeinrichtung die Produktion weiterläuft.

Weiterhin wäre es möglich, dass der Schleusenraum unterhalb des obigen Reinraums und/oder unterhalb des Transportpfads der Kunststoffvorformlinge angeordnet ist. Auch wäre es denkbar, dass der Schleusenraum seitlich gegenüber dem Reinraum versetzt ist. Bei einer weiteren Ausführungsform wäre es denkbar, dass die Behältnisse unter Wirkung der Schwerkraft aus dem Reinraum in den Schleusenraum gelangen können.

Bei einer weiteren vorteilhaften Ausführungsform ist zwischen dem Schleusenraum und dem Reinraum ein Verschließmechanismus vorgesehen, um wahlweise eine Verbindung zwischen dem Reinraum und dem Schleusenraum herzustellen oder diese Verbindung zu unterbrechen. Bei diesem Verschließmechanismus kann es sich beispielsweise um eine Klappe, ein Rollo oder dergleichen handeln. Bevorzugt ist jedoch dieser Verschließmechanismus geeignet und bestimmt, den Schleusenraum und den Reinraum gasdicht voneinander zu trennen. Weiterhin ist es auch möglich, dass dieser Verschließmechanismus wenigstens teilweise als Transportmittel für auszuschleusende Behältnisse dient.

Damit ist bevorzugt der Schleusenraum in Verbindung mit dem Reinraum bringbar, was insbesondere in einem Arbeitsbetrieb erfolgen kann, in dem auch Behältnisse ausgeschleust werden. Bei einer weiteren Vorteilhaften Ausführungsform sind die Umformungsstationen dazu geeignet und bestimmt, Behältnisse im Bereich dieses Schließmechanismus auszuschleusen.

Bei einer weiteren vorteilhaften Ausführungsform weist die Vorrichtung wie oben erwähnt eine Erwärmungseinrichtung zum Erwärmen von Kunststoffvorformlingen auf und die Sterilisationseinrichtung ist zwischen der Erwärmungseinrichtung und wenigstens einer Umformungsstation angeordnet.

Bei einer weiteren vorteilhaften Ausführungsform weist die Vorrichtung eine Druckregelungseinrichtung auf, um einen Druck des Sterilisationsmediums in der Sterilisationseinrichtung aufrecht zu erhalten. Dabei soll wie oben erwähnt diese Druckregelung den Druck auf dem Niveau eines Außendrucks halten. Vorteilhaft soll dieser Druck auf einem Niveau gehalten werden, dieses geringer ist als ein Innendruck des Reinraums der Umformungseinrichtung.

Die vorliegende Erfindung ist weiterhin auf ein Verfahren zum Umformen von Kunststoffvorformlingen zu Kunststoffbehältnissen gerichtet, wobei Kunststoffvorformlinge einer Vielzahl von an einem beweglichen Träger angeordneten Umformungsstationen zugeführt werden, mittels diesen Umformungsstationen zu den Kunststoffbehältnissen umgeformt werden und die umgeformten Kunststoffbehältnisse abgeführt werden. Dabei werden die Kunststoffvorformlinge während ihrer Umformung innerhalb eines Reinraums transportiert und die Kunststoffvorformlinge werden vor ihrer Umformung mittels einer Sterilisationseinrichtung durch Beaufschlagung mit einem Sterilisationsmedium sterilisiert.

Erfindungsgemäß wird ein Teil der Kunststoffvorformlinge oder Kunststoffbehältnisse ausgeschleust, wobei die Kunststoffvorformlinge oder Kunststoffbehältnisse aus dem Reinraum in einen Schleusenraum ausgeschleust werden und dieser Schleusenraum wenigstens zeitweise mit einem Sterilisationsmedium beaufschlagt wird.

Es wird daher auch verfahrensseitig vorgeschlagen, dass ein Schleusenraum vorgesehen ist mittels dessen Kunststoffvorformlinge ausgeschleust werden können. Vorteilhaft handelt es sich bei den auszuschleusenden Kunststoffbehältnissen um fehlerhafte und/oder fehlerhaft gefertigte Kunststoffbehältnisse.

In einem weiteren bevorzugten Verfahren handelt es sich bei dem Sterilisationsmedium um ein von der Sterilisationseinrichtung stammendes Sterilisationsmedium. Dabei handelt es sich, wie oben erwähnt insbesondere um eine Abluft aus der Sterilisationseinrichtung. So kann ein Bypass vorgesehen sein, der eine Zuführung dieser Abluft zu dem Schleusenraum ermöglicht.

Durch die erfindungsgemäße Vorgehensweise ist es damit möglich, eine Ausschleusung von fehlerhaften Behältnissen auch während der laufenden Produktion zu ermöglichen. Insbesondere ist eine Ausschleusung möglich, ohne dass eine neue Sterilisation des Reinraums erforderlich wird. Weiterhin ist es möglich, dass ein so genannter Scherbenwagen - hier als Aufnahmeeinrichtung bezeichnet - verwendet werden kann, der zur Aufnahme dieser Behältnisse dient und der aus dem Schleusenraum ausgeführt werden kann. Auch hierzu ist bevorzugt keine zusätzliche Aufbereitung von Sterilisationsmedium notwendig. Das in einer Abluft der Sterilisationseinrichtung vorhandene Sterilisationsmittel kann zur Sterilisation der Aufnahmeeinrichtung verwendet werden.

So wird erreicht, dass hohe mechanische sowie steuerungstechnische Aufwände nicht mehr notwendig sind. Durch eine prozessgebende Verdünnung der Sterilisationsmittelatmosphäre in der Abluft ist eine chemische Materialbelastung an der Aufnahmeeinrichtung gering, andererseits wird jedoch eine Sterilisation gewährleistet. Eine große Menge an ausgeschleusten Behältnissen führt mit dieser Verfahrensweise nicht mehr zu einem vorzeitigen Beenden der Produktion oder zu einer langen Produktionsunterbrechung insbesondere mit einer nachfolgenden Sterilisation des gesamten Blasmoduls. Auf diese Weise kann die Prozesssicherheit deutlich erhöht werden.

Vorteilhafte Ausführungsformen und Weiterbildungen ergeben sich aus den beigefügten Figuren:
Darin zeigen:
- Fig. 1: eine grob schematische Darstellung einer erfindungsgemäßen Vorrichtung zum Umformen von Kunststoffvorformlingen zu Kunststoffbehältnissen;
- Fig. 2: eine weitere schematische Darstellung einer Vorrichtung zum Umformen von Kunststoffvorformlingen zu Kunststoffbehältnissen einschließlich einer dieser zugeordneten Sterilisationseinrichtung; und
- Fig. 3: eine weitere Seitenansicht einer erfindungsgemäßen Vorrichtung zum Umformen von Kunststoffvorformlingen zu Kunststoffbehältnissen.

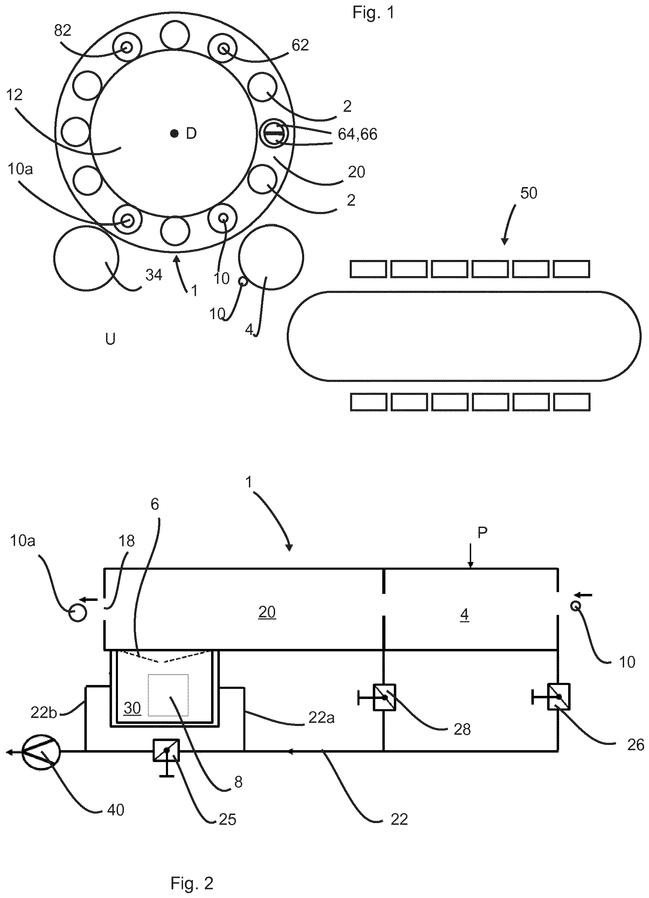

Figur 1 zeigt schematisch eine Vorrichtung 1 zum Umformen von Kunststoffvorformlingen zu Kunststoffbehältnissen 10a. Dieser Vorrichtung 1 ist eine Erwärmungseinrichtung 50 vorgeschaltet, welche zum Erwärmen der Kunststoffvorformlinge dient. An diese Erwärmungseinrichtung 50 zum Erwärmen von Kunststoffvorformlingen schließt sich eine nur schematisch dargestellte Sterilisationseinrichtung 4 an, welche die Kunststoffvorformlinge hier mit einem fließfähigen Sterilisationsmedium, wie beispielsweise Peressigsäure oder Wasserstoffperoxid, sterilisiert. Dabei ist es möglich, dass zwischen der Erwärmungseinrichtung 50 und der Sterilisationseinrichtung weitere Transportmittel, wie etwa Transportsterne, angeordnet sind.

An die Sterilisationseinrichtung 4 schließt sich die eigentliche Umformungseinrichtung 1 an, welche die Kunststoffvorformlinge zu den Kunststoffbehältnissen umformt. Auch zwischen der Sterilisationseinrichtung 4 und der Umformungseinrichtung 1 können derartige Transportsterne zum Transportieren der Kunststoffvorformlinge vorhanden sein. Das Bezugszeichen 20 kennzeichnet einen Reinraum, innerhalb dessen die Kunststoffvorformlinge zu Kunststoffbehältnissen und insbesondere Kunststoffflaschen 10a umgeformt werden. Diese Kunststoffflaschen 10a werden über eine Abführeinrichtung 34, bei der es sich ebenfalls bevorzugt wieder um einen Transportstern handelt, abgeführt. An diese Abführeinrichtung 34 kann sich eine weitere Einheit, wie etwa eine Fülleinrichtung, anschließen, welche die sterilisierten Behältnisse steril befüllt.

Auch der Reinraum 20 kann sich weiter erstrecken als in Figur 1 gezeigt, nämlich über den vollständigen Transportpfad der Behältnisse bis hin zu einem Verschließer (nicht gezeigt), der die steril hergestellten und steril befüllten Behältnisse 10a mit einem Verschluss versieht. Die Umformungseinrichtung 1 weist einen drehbaren Träger 12 auf, an dem eine Vielzahl von Umformungsstationen 2 angeordnet ist. Diese Umformungsstationen weisen dabei jeweils nur schematisch dargestellte Beaufschlagungseinrichtungen 62 (wie etwa Blasdüsen) auf, die die Kunststoffvorformlinge mit einem gasförmigen Medium und insbesondere mit Blasluft beaufschlagen. Daneben weisen die einzelnen Umformungsstationen jeweils Blasformeinrichtungen 64, 66 auf, welche zum Expandieren der Kunststoffvorformlinge dienen, wobei diese Blasformeinrichtungen 64, 66 jeweils verschließ- und öffenbare Blasformen aufweisen, in deren Innerem die Kunststoffvorformlinge expandiert werden.

Figur 2 zeigt eine weitere schematische Darstellung einer erfindungsgemäßen Vorrichtung. Dabei werden die Kunststoffvorformlinge 10 zunächst der Sterilisationseinrichtung 4 zugeführt und dort mittels eines Sterilisationsmediums sterilisiert. Zu diesem Zweck wird (Pfeil P) ein Sterilisationsmedium, beispielsweise H₂O₂, zur Sterilisation der Kunststoffvorformlinge zugeführt. Von dieser Sterilisationseinrichtung 4 werden die Kunststoffvorformlinge in die eigentliche Umformungseinrichtung 1 weitertransportiert. In dieser Umformungseinrichtung ist bereits ein Reinraum 20 ausgebildet. Wie auch unter Bezugnahme auf Figur 1 gezeigt, ist dieser Reinraum 20 bevorzugt kanalartig ausgebildet und umgibt insbesondere einen Transportpfad der Kunststoffvorformlinge. Es wird angestrebt, diesen Reinraum möglichst klein auszuführen, da dann ein nur relativ geringes Volumen steril gehalten werden muss. Die Kunststoffvorformlinge 10 werden in Figur 2 von rechts kommend von einer Erwärmungseinrichtung 50 (vgl. Fig. 1) zugeführt.

Das Bezugszeichen 30 kennzeichnet den Schleusenraum, innerhalb dessen - wie oben erwähnt - eine Aufnahmeeinrichtung 8 zur Aufnahme von fehlerhaften Kunststoffbehältnissen angeordnet ist. Über einen Klappenmechanismus 6 kann dieser Schleusenraum 30 von dem Reinraum 20 abgetrennt werden. In einem normalen Betriebszustand der Produktion ist dieses Klappenelement 6 geöffnet. Dieses Klappenelement ist damit der oben erwähnte Schließmechanismus, der zum Abtrennen des Schleusenraums 30 von dem Reinraum 20 dient. Bevorzugt kann dieses Klappenelement auch als Transportmittel, etwa als Rutsche zum Transportieren der auszuschleusenden Kunststoffvorformlinge dienen.

Damit können Behältnisse in die Aufnahmeeinrichtung 8 ausgeschleust werden. Über zwei Ventileinrichtungen, wie beispielsweise Ventile 26, 28, kann aus der Sterilisationseinrichtung 4 Abluft entnommen werden. Im Produktionsbetrieb ist auch eine Abluftklappe 25 im Hauptabluftstrom bzw. der Fließmittelleitung 22 geöffnet, so dass die Abluft mittels einer Pumpeneinrichtung 40 nicht über den Schleusenraum 30, sondern unmittelbar abgeführt wird.

Sobald die Aufnahmeeinrichtung 8 mit Behältnissen gefüllt wird, kann das Klappenelement 6 geschlossen werden und damit der Schleusenraum 30 von dem Reinraum 20 abgetrennt werden. Die Produktion kann bevorzugt in diesem Zustand fortgeführt werden. Es wäre dabei möglich, während der Entnahme der Aufnahmeeinrichtung den Arbeitsbetrieb fortzuführen. Bevorzugt ist der Reinraum 20 daher derart ausgeführt, dass er auch während einer Entnahme von auszuschleusenden Behältnissen (also während der Schleusenraum von dem Reinraum abgetrennt ist) eine gewisse Aufnahmekapazität für weitere auszuschleusende Behältnisse aufweist.

Die Aufnahmeeinrichtung 8 kann aus dem Schleusenraum 30 entnommen und entleert werden und in einem entleerten Zustand wieder in den Schleusenraum 30 eingeführt werden. In einem weiteren Verfahrensschritt findet (bei geschlossener Klappe 6) eine Re-Sterilisation der Aufnahmeeinrichtung 8 statt. Zu diesem Zweck kann das Ventil 25 in der Fließmittelleitung 22 geschlossen werden und damit der Abluftstrom über den Bypass 22a, 22b durch den Schleusenraum 30 geleitet werden, um auf diese Weise die in dem geschlossenen Schleusenraum 30 stehende Aufnahmeeinrichtung 8 wiederum mit H₂O₂ zu sterilisieren. Nach einer erfolgten Sterilisationszeit öffnet die Klappeneinrichtung 6 wieder und die Produktion kann fortgeführt werden. In diesem Falle ist es nicht nötig, den Reinraum 20 erneut zu sterilisieren. Auf diese Weise kann eine Produktion im günstigsten Falle direkt fortgeführt werden, allerdings werden in jedem Fall die Ausfälle von Produktionszeiten gering gehalten.

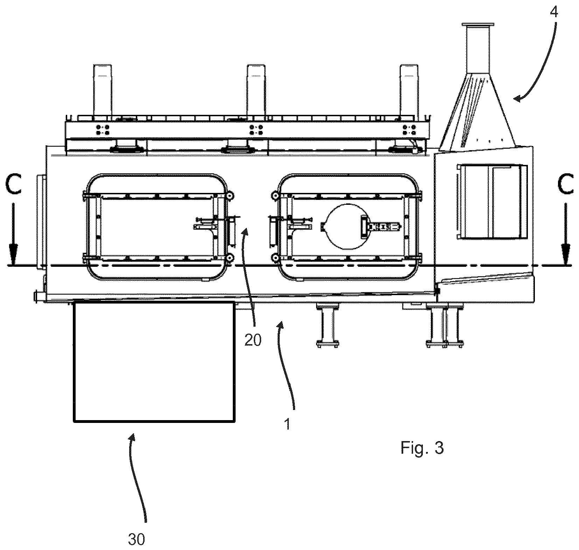

Figur 3 zeigt eine weitere Darstellung der erfindungsgemäßen Vorrichtung. Bei dieser Ausgestaltung ist der Schleusenraum 30 unterhalb des Reinraums 20 angeordnet. Es wäre jedoch auch möglich, dass der Schleusenraum 30 seitlich neben dem Reinraum 20 angeordnet ist. Bevorzugt ist der Schleusenraum 30 in einem Bereich der Umformungseinrichtung angeordnet, in dem die Behältnisse bereits fertiggeblasen wurden. Auf diese Weise können fehlerhafte Behältnisse auch noch zu einem relativ späten Zeitpunkt ausgeleitet werden.

Das Bezugszeichen 18 in Figur 2 kennzeichnet eine Ausgangsöffnung der Umformungseinrichtung, über welche die gefertigten Behältnisse 10a ausgeführt werden. Mit anderen Worten können hier Behältnisse grundsätzlich über zwei Wege aus der Vorrichtung entnommen werden, nämlich einerseits über den regulären Ausgang 18 und andererseits (im Falle von fehlerhaften Behältnissen) durch eine Öffnung der Klappeneinrichtung 6.

Durch die hier beschriebene Verfahrensweise ist es damit erstmals möglich, eine Aufnahmeeinrichtung, wie einen Scherbenwagen, zur Aufnahme von fehlerhaften Behältnissen bei einer sterilen Umformungseinrichtung und insbesondere einer sterilen Blasmaschine einzusetzen. Es ist insbesondere keine zusätzliche Aufbereitung von Sterilisationsmedium notwendig. Das in der Abluft vorhandene Sterilisationsmedium (insbesondere (bevorzugt gasförmiges) H₂O₂) kann zur Sterilisation der Aufnahmeeinrichtung verwendet werden. Auf diese Weise kann auf hohe mechanische sowie steuerungstechnische Aufwände verzichtet werden. Durch die prozessgegebene Verdünnung der H₂O₂-Atmosphäre in der Abluft ist eine chemische Materialbelastung an der Aufnahmeeinrichtung gering, andererseits wird jedoch eine Sterilisation gewährleistet. Eine große Menge an ausgeschleusten Behältnissen führt mit der hier beschriebenen Verfahrensweise nicht mehr zu einem vorzeitigen Beenden der Produktion oder zu einer langen Produktionsunterbrechung mit einer nachfolgenden Sterilisation des gesamten Blasmoduls. Auf diese Weise wird die Prozesssicherheit der Anlage erhöht.

### Bezugszeichenliste

- 1: Vorrichtung
- 4: Sterilisationseinrichtung
- 6: Schließeinrichtung, Klappenelement
- 8: Aufnahmeeinrichtung
- 10: Kunststoffvorformlinge
- 10a: Kunststoffbehältnisse
- 12: Träger
- 18: Ausgang
- 20: Reinraum
- 22: Hauptleitung
- 22a, 22b: Bypass
- 26, 28: Ventileinrichtung
- 25: Abluftklappe
- 30: Schleusenraum
- 34: Abführeinrichtung
- 50: Erwärmungseinrichtung
- 62: Beaufschlagungseinrichtung

## Patentansprüche

1. Vorrichtung zum Umformen von Kunststoffvorformlingen (10) zu Kunststoffbehältnissen (10a) mit einem beweglichen Träger (12), an dem wenigstens eine Umformungsstation (2) zum Umformen der Kunststoffvorformlinge (10) angeordnet ist, wobei die Umformungsstation (2) entlang eines vorgegebenen Transportpfades transportiert wird und wobei die Vorrichtung (1) einen Reinraum (20) aufweist, innerhalb dessen die Kunststoffvorformlinge (10) umgeformt werden, wobei dieser Reinraum (20) mittels wenigstens einer Wandung gegenüber einer unsterilen Umgebung (U) abgegrenzt ist, mit einer Sterilisationseinrichtung (4) zum Sterilisieren der Kunststoffvorformlinge (10) und/oder Kunststoffbehältnisse (10a), welche die zu sterilisierenden Kunststoffvorformlinge (10) und/oder Kunststoffbehältnisse (10a) zu deren Sterilisation mit einem fließfähigen Sterilisationsmedium beaufschlagt,
**dadurch gekennzeichnet, dass**
die Vorrichtung (1) eine Ausschleuseeinrichtung (6, 8) zum Ausschleusen von Behältnissen aus dem Reinraum aufweist und diese Ausschleuseeinrichtung (6, 8) einen Schleusenraum (30) aufweist, aus welchem ausgeschleuste Behältnisse (10, 10a) entnommen werden können, wobei dieser Schleusenraum (30) mit einer ein Sterilisationsmedium enthaltenden Atmosphäre beaufschlagbar ist.

2. Vorrichtung (1) nach Anspruch 1,
**dadurch gekennzeichnet, dass**
eine Fließmittelleitung (22) vorgesehen ist, welche den Schleusenraum (30) wenigstens zeitweise mit der Sterilisationseinrichtung (4) verbindet.

3. Vorrichtung (1) nach Anspruch 2,
**dadurch gekennzeichnet, dass**
die Fließmittelleitung (22) derart gestaltet ist, dass dem Schleusenraum (30) von der Sterilisationseinrichtung (4) stammendes Sterilisationsmedium zuführbar ist.

4. Vorrichtung (1) nach wenigstens einem der vorangegangenen Ansprüche 2 - 3,
**dadurch gekennzeichnet, dass**
die Fließmittelleitung (22) eine Abluft aus der Sterilisationseinrichtung (4) dem Schleusenraum (30) zuführt.

5. Vorrichtung (1) nach wenigstens einem der vorangegangenen Ansprüche,
**dadurch gekennzeichnet, dass**
die Vorrichtung (1) eine gegenüber dem Reinraum (20) bewegliche Aufnahmeeinrichtung (8) zur Aufnahme von auszuschleusenden Behältnissen (10, 10a) aufweist.

6. Vorrichtung (1) nach wenigstens einem der vorangegangenen Ansprüche,
**dadurch gekennzeichnet, dass**
die Vorrichtung (1) eine Erwärmungseinrichtung (50) zum Erwärmen von Kunststoffvorformlingen (10) aufweist und die Sterilisationseinrichtung (4) zwischen der Erwärmungseinrichtung (50) und der wenigstens einen Umformungsstation (2) angeordnet ist.

7. Vorrichtung (1) nach wenigstens einem der vorangegangenen Ansprüche,
**dadurch gekennzeichnet, dass**
die Vorrichtung eine Druckregelungseinrichtung aufweist, um einen Druck des Sterilisationsmediums in der Sterilisationseinrichtung (4) aufrecht zu erhalten.

8. Vorrichtung (1) nach wenigstens einem der vorangegangenen Ansprüche,
**dadurch gekennzeichnet, dass**
die Vorrichtung einen Schließmechanismus (6) aufweist, um den Schleusenraum (30) gegenüber dem Reinraum (20) abzugrenzen.

9. Verfahren zum Umformen von Kunststoffvorformlingen (10) zu Kunststoffbehältnissen (10a), wobei Kunststoffvorformlinge (10) einer Vielzahl von an einem beweglichen Träger (12) angeordneten Umformungsstationen (2) zugeführt werden und mittels diesen Umformungsstationen (2) zu den Kunststoffbehältnissen (10a) umgeformt werden und die umgeformten Kunststoffbehältnisse (10a) abgeführt werden, wobei die Kunststoffvorformlinge (10) während ihrer Umformung innerhalb eines Reinraums (20) transportiert werden und die Kunststoffvorformlinge (10) vor ihrer Umformung mittels einer Sterilisationseinrichtung (4) durch Beaufschlagung mit einem Sterilisationsmedium sterilisiert werden,
**dadurch gekennzeichnet, dass**
ein Teil der Kunststoffvorformlinge (10) oder Kunststoffbehältnisse (10a) ausgeschleust wird, wobei die Kunststoffvorformlinge (10) oder Kunststoffbehältnisse (10a) aus dem Reinraum (20) in einen Schleusenraum (30) ausgeschleust werden, wobei dieser Schleusenraum (30) wenigstens zeitweise mit einem Sterilisationsmedium beaufschlagt wird.

10. Verfahren nach Anspruch 9,
**dadurch gekennzeichnet, dass**
es sich bei dem Sterilisationsmedium um ein von der Sterilisationseinrichtung (4) stammendes Sterilisationsmedium handelt.

## Claims

1. Apparatus for forming plastic preforms (10) into plastic containers (10a), with a movable carrier (12) on which at least one forming station (2) is arranged for forming the plastic preforms (10), wherein the forming station (2) is transported along a predefined transport path, and wherein the apparatus (1) has a clean room (20) inside which the plastic preforms (10) are formed, wherein this clean room (20) is isolated from a non-sterile environment (U) by at least one wall, with a sterilisation device (4) for sterilising the plastic preforms (10) and/or plastic containers (10a), which device acts upon the plastic preforms (10) and/or plastic containers (10a) to be sterilised with a flowable sterilisation medium for their sterilisation,
**characterised in that**
the apparatus (1) comprises an ejection device (6, 8) for ejecting containers from the clean room, and this ejection device (6, 8) has a lock chamber (30) from which ejected containers (10, 10a) can be removed, wherein this lock chamber (30) can be acted upon with an atmosphere containing a sterilisation medium.

2. Apparatus (1) according to claim 1,
**characterised in that**
a fluid line (22) is provided which at least at times connects the lock chamber (30) to the sterilisation device (4).

3. Apparatus (1) according to claim 2,
**characterised in that**
the fluid line (22) is configured such that sterilisation medium originating from the sterilisation device (4) can be supplied to the lock chamber (30).

4. Apparatus (1) according to at least one of the preceding claims 2 - 3,
**characterised in that**
the fluid line (22) supplies exhaust air from the sterilisation device (4) to the lock chamber (30).

5. Apparatus (1) according to at least one of the preceding claims,
**characterised in that**
the apparatus (1) has a receiver device (8) which is movable relative to the clean room (20) for receiving containers (10, 10a) to be ejected.

6. Apparatus (1) according to at least one of the preceding claims,
**characterised in that**
the apparatus (1) has a heating device (50) for heating plastic preforms (10), and the sterilisation device (4) is arranged between the heating device (50) and the at least one forming station (2).

7. Apparatus (1) according to at least one of the preceding claims,
**characterised in that**
the apparatus has a pressure control device for maintaining a pressure of the sterilisation medium in the sterilisation device (4).

8. Apparatus (1) according to at least one of the preceding claims,
**characterised in that**
the apparatus has a closing mechanism (6) for isolating the lock chamber (30) from the clean room (20).

9. Method for forming plastic preforms (10) into plastic containers (10a), wherein the plastic preforms (10) are supplied to a plurality of forming stations (2) arranged on a movable carrier (12) and formed by means of these forming stations (2) into plastic containers (10a), and the formed plastic containers (10a) are discharged, wherein during their formation, the plastic preforms (10) are transported within a clean room (20) and before their formation, the plastic preforms (10) are sterilised by acting upon with a sterilisation medium by means of a sterilisation device (4),
**characterised in that**
a part of the plastic preforms (10) or plastic containers (10a) is ejected, wherein the plastic preforms (10) or plastic containers (10a) are ejected from the clean room (20) into a lock chamber (30), wherein this lock chamber (30) is at least at times acted upon with a sterilisation medium.

10. Method according to claim 9,
**characterised in that**
the sterilisation medium is a sterilisation medium originating from the sterilisation device (4).

## Revendications

1. Dispositif destiné à façonner des préformes en matière plastique (10) pour en faire des contenants en matière plastique (10a) avec un support (12) déplaçable contre lequel est agencé au moins un poste de façonnage (2) pour façonner les préformes en matière plastique (10), dans lequel le poste de façonnage (2) est transporté le long d'un chemin de transport prédéfini, et dans lequel le dispositif (1) présente un compartiment blanc (20) à l'intérieur duquel les préformes en matière plastique (10) sont façonnées, dans lequel ce compartiment blanc (20) est délimité vis-à-vis d'un environnement (U) non stérile au moyen d'au moins une paroi, avec un équipement de stérilisation (4) pour stériliser les préformes en matière plastique (10) et/ou les contenants en matière plastique (10a), lequel sollicite les préformes en matière plastique (10) et/ou les contenants en matière plastique (10a) à stériliser avec un agent de stérilisation pouvant s'écouler en vue de leur stérilisation,
**caractérisé en ce que**
le dispositif (1) présente un équipement d'évacuation (6, 8) pour évacuer des contenants hors du compartiment blanc et cet équipement d'évacuation (6, 8) présente un compartiment d'évacuation (30) depuis lequel des contenants (10, 10a) évacués peuvent être prélevés, dans lequel ce compartiment d'évacuation (30) peut être sollicité avec une atmosphère contenant un agent de stérilisation.

2. Dispositif (1) selon la revendication 1,
**caractérisé en ce que**
un conduit d'agent d'écoulement (22) est prévu qui relie au moins par moments le compartiment d'évacuation (30) à l'équipement de stérilisation (4).

3. Dispositif (1) selon la revendication 2,
**caractérisé en ce que**
le conduit d'agent d'écoulement (22) est conçu de telle sorte qu'un agent de stérilisation provenant de l'équipement de stérilisation (4) puisse être amené au compartiment d'évacuation (30).

4. Dispositif (1) selon au moins l'une des revendications précédentes 2 à 3,
**caractérisé en ce que**
le conduit d'agent d'écoulement (22) amène au compartiment d'évacuation (30) un air d'échappement depuis l'équipement de stérilisation (4).

5. Dispositif (1) selon au moins l'une des revendications précédentes,
**caractérisé en ce que**
le dispositif (1) présente un équipement de réception (8) déplaçable par rapport au compartiment blanc (20) pour réceptionner des contenants (10, 10a) à évacuer.

6. Dispositif (1) selon au moins l'une des revendications précédentes,
**caractérisé en ce que**
le dispositif (1) présente un équipement de chauffage (50) pour chauffer des préformes en matière plastique (10), et l'équipement de stérilisation (4) est agencé entre l'équipement de chauffage (50) et le au moins un poste de façonnage (2).

7. Dispositif (1) selon au moins l'une des revendications précédentes,
**caractérisé en ce que**
le dispositif présente un équipement de régulation de pression pour maintenir une pression de l'agent de stérilisation dans l'équipement de stérilisation (4).

8. Dispositif (1) selon au moins l'une des revendications précédentes,
**caractérisé en ce que**
le dispositif présente un mécanisme de verrouillage (6) pour délimiter le compartiment d'évacuation (30) par rapport au compartiment blanc (20).

9. Procédé destiné à façonner des préformes en matière plastique (10) pour en faire des contenants en matière plastique (10a), dans lequel des préformes en matière plastique (10) sont amenées à une pluralité de postes de façonnage (2) agencés contre un support (12) déplaçable et sont façonnées au moyen de ces postes de façonnage (2) pour en faire les contenants en matière plastique (10a) et les contenants en matière plastique (10a) façonnés sont emportés, dans lequel les préformes en matière plastique (10) sont transportées pendant leur façonnage à l'intérieur d'un compartiment blanc (20), et les préformes en matière plastique (10) sont stérilisées par sollicitation avec un agent de stérilisation avant leur façonnage au moyen d'un équipement de stérilisation (4),
**caractérisé en ce que**
une partie des préformes en matière plastique (10) ou des contenants en matière plastique (10a) est évacuée, dans lequel les préformes en matière plastique (10) ou les contenants en matière plastique (10a) sont évacué(e)s hors du compartiment blanc (20) jusque dans un compartiment d'évacuation (30), dans lequel ce compartiment d'évacuation (30) est sollicité au moins par moments par un agent de stérilisation.

10. Procédé selon la revendication 9,
**caractérisé en ce que**
l'agent de stérilisation est un agent de stérilisation provenant de l'équipement de stérilisation (4).
